(19) Europäisches Patentamt

European Patent Office

Office européen des brevets

(11) Publication number: **0 203 656 B1**

# EUROPEAN PATENT SPECIFICATION

(12)

(45) Date of publication of patent specification: **23.10.91**

(21) Application number: **86200846.3**

(22) Date of filing: **09.03.82**

(51) Int. Cl.⁵: **H01M 2/18, H01M 10/36, H01M 10/04, H01M 8/24, H01M 4/00, H01M 8/02, C25B 13/02, C25B 9/00**

(60) Publication number of the earlier application in accordance with Art.76 EPC: **0 066 938**

(54) **Unitary separator-spacer for electrochemical cell, and electrochemical cell construction using such spacer(s).**

(30) Priority: **01.06.81 US 268665**
**01.06.81 US 268666**
**01.06.81 US 268674**
**01.06.81 US 268675**

(43) Date of publication of application:
**03.12.86 Bulletin 86/49**

(45) Publication of the grant of the patent:
**23.10.91 Bulletin 91/43**

(84) Designated Contracting States:
**AT CH DE FR GB IT LI SE**

(56) References cited:
| | |
|---|---|
| **CH-A- 119 558** | **DE-A- 2 627 143** |
| **FR-A- 1 504 315** | **FR-A- 1 547 710** |
| **FR-A- 2 085 028** | **FR-A- 2 146 144** |
| **FR-A- 2 146 602** | **GB-A- 1 160 587** |
| **US-A- 4 218 521** | |

(73) Proprietor: **EXXON RESEARCH AND ENGINEERING COMPANY**
**P.O.Box 390, 180 Park Avenue**
**Florham Park, New Jersey 07932(US)**

(72) Inventor: **Bellows, Richard James**
**634 Carleton Road**
**Westfield New Jersey(US)**
Inventor: **Einstein, Harry**
**25 Midvale Drive**
**Springfield New Jersey(US)**
Inventor: **Grimes, Patrick Gerard**
**504 Mountain Avenue**
**Westfield New Jersey(US)**
Inventor: **Newby, Kenneth Russ**
**77 Sycamore Avenue**
**Berkeley Heights New Jersey(US)**
Inventor: **Tsien, Hsue Chu**
**11 Oak Hill Road**
**Chatham New Jersey(US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

(74) Representative: **Somers, Harold Arnold et al**
**ESSO Engineering (Europe) Ltd. Patents &**
**Licences Mailpoint 72 Esso House Ermyn**
**Way**
**Leatherhead, Surrey KT22 8XE(GB)**

## Description

This invention relates to an integral separator and spacer unit for use in an electrochemical cell, e.g. an improved elecrochemical cell construction which can be useful in vehicular battery systems.

In recent times, the use of light weight battery materials and cost efficient battery constructions have been of prime interest to the automotive and battery industries. In particular, cost-effective battery designs are of paramount importance for electric vehicular systems. For electric vehicles and other bulk energy storage applications, cost justification of a battery system is highly sensitive to the initial battery cost and to the life-cycle cost. The present invention seeks to provide an integral separator and spacer unit for use in a new electrochemical cell construction which reduces the initial costs and extends operating life for a battery system through the utilization of new manufacturing techniques, new weight-reducing materials and new integration of components.

A new cell design and construction has resulted from the achievement of the above objectives, which design and construction features amongst other novelties:

1. The integral separator and spacer to reduce space, parts and cost.

2. A reduction in gas entrapment with the use of the new separator-spacer design.

3. An integral conductive/non-conductive (dielectric) coextruded plastic electrode which is both light weight and inexpensive to manufacture.

4. A safer battery design and construction which reduces the possibility of spilling corrosive materials should compartments housing these materials rupture.

The subject invention is useful in the manufacture, construction and assembly of many different kinds of electrochemical cells, and the invention should be interpreted as not being limited to a specific system.

It is of particular interest for use in a circulating zinc-bromine battery, constructed in accordance with the teachings advanced in the aforementioned U.S. Patent to: Agustin F. Venero, entitled: Metal Halogen Batteries and Method of Operating Same, Patent No. US-A-4,105,829, issued: August 8, 1978, and assigned to the present assignee.

The above-mentioned battery system is of particular interest because of its low cost and availability of reactants, its high cell voltage and its high degree of reversibility.

FR-A-2300424 discloses a fuel cell comprising a stack of electrodes alternating with separators. Each electrode comprises a non-conductive rectangular frame may have the form of discrete projections. The spacing members are of electrically non-conductive material and may be integral with their supporting web.

DE-A-2627143 (equivalent to GB-A-1548597) discloses a porous separator for an electrochemical cell which has been stamped or pressed to have projections on each side.

CH-A-119,558 discloses a porous ebonite membrane supported at its peripheral edges by a surrounding non-porous ebonite frame. The frame may be thicker than the membrane, and the membrane is supported by ebonite ribs which extend between opposite sides of the frame. The ribs are thicker than the membrane.

FR-A-2146602 describes and claims a soluble anode electrochemical generator of electric power, wherein a thin anodic compartment (preferably a few tenths of a millimetre in thickness) is bounded by a layer of the material forming the anode and a microporous diaphragm facing such layer, and a spacer is disposed between such layer and the microporous diaphragm, the spacer having on one face means which are applied to such layer and capable of being elastically deformed, the spacer bearing via its other face against the microporous diaphragm, thus enabling the spacing between such layer and diaphragm to be maintained substantially constant during discharge. The spacer is in the form of an open flexible plastic trellis comprising rows of substantially perpendicular rods, the intersection nodes of such network having, on the face opposite the anode, resilient studs (which may be of conical shape) whose height is increased by decompression as the anodic material is consumed.

FR-A-2146144 describes and claims an electrochemically rechargeable electrochemical generator of electric energy, having a liquid, more particularly alkaline electrolyte, and comprising a repetitive stack of groups of thin components having at their edges, generally formed by a framework of synthetic insulating material and bounding active portions of substantially rectangular shape, apertures forming by their superposition channels for supplying and evacuating electrolyte on the one hand and an oxygen-containing gas on the other, each group comprising more particularly:

- a seating-tight bipolar electrode having a non-porous positive face which has a catalytic oxygen-reducing coating and is supplied during discharge on this face with the electrolyte and an oxygen-containing gas, the bipolar electrode having a negative face comprising as an active material negative during discharge an oxidizable metal whose oxide has a low, but not zero solubility in the electrolyte in the discharge conditions and which can be regenerated from its oxides;

- a microporous diaphragm;

at least certain of such components having at their edges microchannels for the introduction, on the one hand, of electrolyte from said supply channels to the negative face of the bipolar electrode, and on the other hand oxygen-containing gas to the positive face of the bipolar electrode, and microchannels for evacuating, on the one hand, residual gas having given up some or all of the oxygen which it contained after flowing along the positive face of the bipolar electrode, and on the other hand electrolyte which has flowed along the negative face of the bipolar electrode, the microchannels performing the same function of supply or evacuation for a same liquid having an equal charge loss, the apertures in the peripheral portion of the components being disposed on two opposite edges and being in even numbers on each of such edges, the channels formed by the superposition of the apertures placed on one of such edges being used alternately for the supply or evacuation of fluid to or from the positive face and the supply or evacuation of fluid to or from the negative face of the bipolar electrode, the flows of the fluids along the positive and negative faces of the bipolar electrode taking place in parallel and in the same direction, means being provided, such as reliefs, embossing, a grid or the like, to maintain a substantially constant spacing between such components and ensure the free flow of the fluids with an equal density of charge losses, the sum of the thicknesses of the peripheral portions of the components being equal to the sum of the thicknesses of the central portions of such components, clamping means, such as tie rods or a coating also being provided to keep such components assembled, the generator being characterized in that it comprises between each negative face and the adjacent microporous diaphragm a filtering wall attached at a small distance from the negative face, the volume defined between the negative face and the filtering wall being adequate to contain the oxygen formed after the complete oxidation of the negative material following a discharge, the microchannels situated at the edge of the components being so disposed that when the electrolyte has flowed along the negative face of the bipolar electrode it can escape in the direction of the evacuation channels only after passing through the filtering wall, means being provided to ensure a substantially constant spacing between the negative face of the filtering wall and a substantially uniform retention of the oxide formed during a discharge in such volume. The bipolar electrode has an embossed structure and is in direct contact with the filtering wall. A core of conductive material is clamped between the negative face of the bipolar electrode and the filtering wall; the said conductive material is inert during generator operation and electrolyte can pass therethrough and it defines between the negative face and the filtering wall a volume adequate to contain the oxygen formed after the complete oxidation of the negative material during a discharge. The inert core has projections (e.g., embossing) forming an obstacle to the rectilinear flow of the electrolyte along the negative face.

FR-A-2085028 (equivalent to GB-A-1296316) describes and claims an electrochemical battery comprising at least two structural elements each containing a centrally disposed active electrode, fixed in a surrounding frame, wherein the structural elements are directly or indirectly anchored to each other with self-locking, snapping elements. The battery also comprises structural elements each consisting of a cooling member fixed in a surrounding frame and being anchored to other structural elements with self-locking snapping elements. The surrounding frames of the structural elements are made wholly or partly of thermoplastic material.

The present invention provides a unitary separator and spacer unit for use in an electrochemical cell having electrodes and through which cell, during operation, a circulating electrolyte flows in contact with the electrodes, adjacent pairs of electrodes being separated and spaced apart by a respective unit, the said unit comprising a single non-porous frame or border surrounding and defining the edges or borders of the faces of a non-perforated microporous web which is thinner than the frame or border in order to define or form either internal compartments or recesses forming at least part of such internal compartments between the unit and the adjacent electrodes when assembled with the latter so that circulating electrolyte can flow about said electrodes, said web being capable of providing ionic communication between adjacent compartments of the cell, a plurality of discrete pebble-shaped and/or rod-shaped projections extending from each face of the web and which projections are ionically either less conductive or substantially non-conductive for maintaining a spaced compartmental distance between said unit and adjacent electrodes, substantially all of said projections extending from one face of the web being directly opposite corresponding projections extending from the other face thereof, the web being preferably ion-selective.

Preferably, the frame has a connector which is cooperable with a connector of an adjacent frame, when the electrochemical cell is assembled, for the passage of electrolyte through the assembled electrochemical cell, and a channel in the wall of each connector for the passage of electrolyte from one connector into a compartment and via the channel into another connector. Preferably, each connector is of the male-female type, the male part being adapted to be received in the female part of a connector of another unit on one side and the female part being adapted to receive the male part of a connector of a further unit on the opposite side.

Preferably, the frame is overmolded around the edges of the web. Preferably, at least some of the projections have non-ionically conductive caps thereon or thereto. The projections may be, e.g., diamond or rhombus shaped, and they may be of a different material from the material of the web. Preferably, the projections are substantially non-porous.

The invention also provides an electrochemical battery comprising at least one stack of cells each comprised of an integral separator and spacer unit, as described herein, disposed between a pair of electrodes.

Preferably, each electrode is comprised of a plastics sheet having a coextruded electrically-conductive mid-portion and electrically non-conductive relatively narrow side-portions on no more than two opposite sides of the mid-portion.

Preferably, the spacer units and the electrodes are assembled into a stack of alternating spacer units and electrodes by hollow connectors associated with the spacer units, each connector of one unit having a male portion of the respective connector received in a female portion of the connector of an adjacent spacer unit to form fluid conduits for said cells. Preferably, adjacent spacer units and electrodes define compartments or spaces in which electrolyte can be received and/or can flow, and preferably, each hollow connector has a channel or orifice in the wall thereof providing communication with a respective compartment or space for the passage of electrolyte through the compartment or space to and/or from the interior of the hollow connectors.

The integral separator-spacer comprises a microporous sheet, which provides ionic communication between adjacent compartments of each cell. A web surface on each side of the microporous sheet is covered with projections for maintaining a spaced compartmental distance between said separator-spacer and said adjacent electrodes. The projections on one web surface are directly opposite corresponding projections on the other web surface of the sheet in order to provide a greater structural integrity to the sheet in its capacity to maintain a spaced distance between electrodes. The projections can be pebble or rod-shaped or a combination of pebble and rod-shapes.

The separator-spacer has a non-porous border substantially surrounding the mircroporous sheet, which microporous sheet can be ion-selective.

The electrodes have narrow non-conductive top and bottom side portion strips with respect to their larger conductive mid-portions. The electrodes can be made monopolar or bipolar, but can be specifically bipolar in order to operate in a zinc-bromine system, for example. The non-conductive side strips can be made of polypropylene, polyethylene, or copolymers thereof, while the conductive mid-portion comprises a carbon-containing polyolefin. More specifically, the conductive mid-portion comprises by weight 100 parts polyolefin, 25 parts carbon, 5 parts each pitch fiber and glass fiber and 1 part fumed silica powder. The extruded material can be hot formed and can be dimpled.

The electrochemical battery can be provided with a protective current in order to reduce or eliminate parasitic shunt currents in common electrolyte systems of this type.

The zinc-bromine electrochemical battery comprising the unitary separator and spacer unit of the invention also features a leak and impact resistant construction comprising:

a first inner compartment for storing a bromine-rich phase;

a second compartment substantially surrounding said first inner compartment and containing a first electrolyte for circulation through said cell;

a third compartment substantially surrounding both said second and first compartments and containing a second electrolyte for circulation through said cell; and

an outer casing substantially surrounding said first, second and third compartments.

The first electrolyte is generally the catholyte for the system, while the second electrolyte is generally the anolyte. The bromine-rich phase is a non-aqueous phase which separates from the aqueous catholyte and contains bromine complexing agents.

The compartment and casing materials are generally comprised of chemically inert, impact resistant plastics.

Our co-pending European patent application No. 82301197.8 (patent publication No. EP-A-0066938) from which the present patent application has been divided, describes and claims an electrode for use in an electrochemical cell (for example a zinc-bromine cell) comprising a central part of electrically-conductive plastics material and side parts of electrically non-conductive plastics material which have been coextruded with the central part, characterized in that the side parts are provided only on two opposite edges of the central part as a result of coextrusion in a side-by-side relationship with the central part and the side parts have substantially the same thickness as the central part and the two edges of the central part extending between the side parts are undercut so that the lengths of the side parts exceed the length of the undercut central part between the two edges. We make no claim herein to the said electrode per se.

Our copending European patent application No. 86200847.1 (EP-A-0203657) describes and claims an electrochemical apparatus comprising at least one cell comprising a separator disposed between electrodes, each electrode having a central part of electrically-conductive plastics material and side parts of electrically non-conductive material, characterized in that the side parts are provided only on two opposite edges of the central part as a result of coextrusion in a side-by-side relationship with the central part, and the side parts and the central part are flat and have substantially the same thickness. We make no claim herein to the electrochemical apparatus per se claimed in EP-A-0203657.

It is an object of the present invention to provide a cost efficient electrochemical cell;

It is another object of this invention to provide an electrochemical cell which is light-weight and compact;

It is a further object of the invention to provide a new electrochemical battery having a high voltage and cyclic-life.

These and other objects of this invention will be better understood and will become more apparent with reference to the following detailed description considered in conjunction with the accompanying drawings, wherein :

Figure 1 is a schematic diagram of a typical circulating zinc-bromine system which can benefit from the inventive unitary separator and spacer unit described with reference to Figures 2 to 7 hereof.

Figure 2 is a partially cutaway prospective view of an embodiment of a zinc-bromine system;

Figure 3 is an exploded perspective view of the two-sheet stack construction of a portion of a stack of cells of an electrochemical system embodying the unitary separator/spacer unit of this invention;

Figure 4 is a front view of a coextruded sheet electrode of the stack shown in Figure 3;

Figure 4a is a side view of the sheet electrode of Figure 4;

Figure 5 is a perspective view of the electrode being extruded;

Figures 5a, 5b and 5c are respective top, front and side views of the coextrusion die used to fabricate the sheet electrode shown in Figures 3, 4, and 4a;

Figure 6 is a front view of the unitary separator-spacer unit according to the invention illustrated in the stack of Figure 3;

Figure 6a is a side view of the unitary separator-spacer unit depicted in Figure 6;

Figures 7a through 7d are illustrative of various designs for the projections depicted on the web surfaces of the separator-spacer unit shown in Figures 6 and 6a; and

Figures 7aa through 7dd are side views of the projections depicted in respective Figures 7a through 7d.

## DETAILED DESCRIPTION OF THE INVENTION

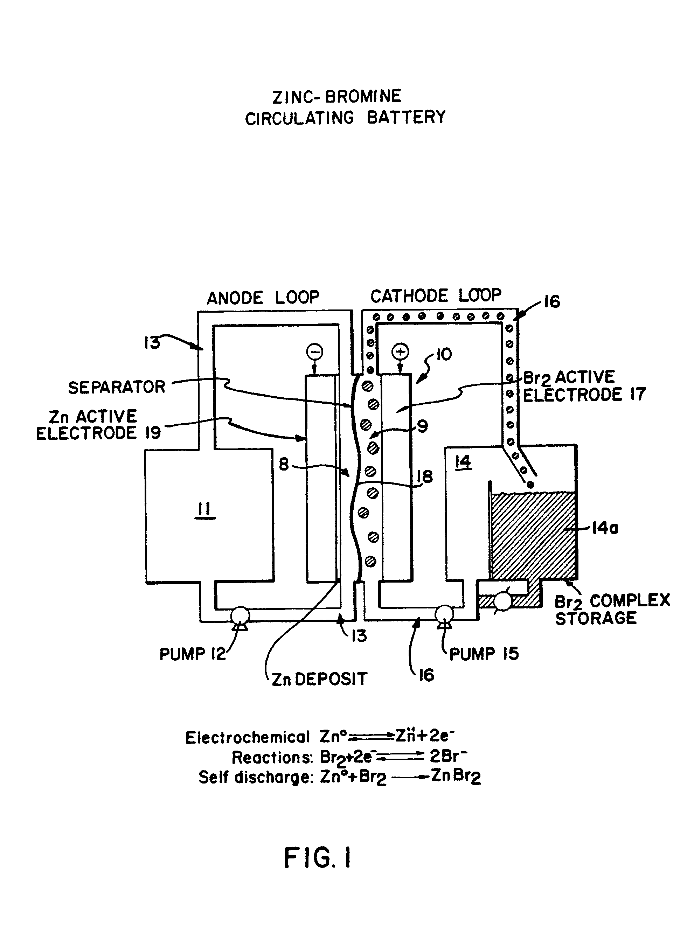

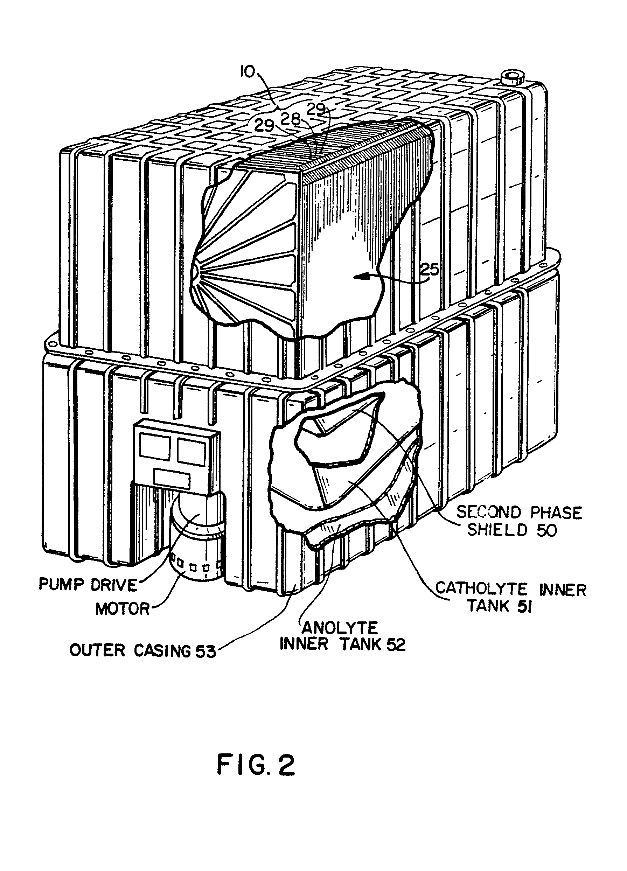

Referring to Figure 1, a schematic diagram of a typical circulating, bipolar zinc-bromine system is shown. This system can benefit from the inventive separator and spacer unit which will be hereinafter described with reference to Figures 2 through 7. The zinc-bromine system of Figure 1 comprises two electrolytes which are circulated through separate compartments 8, 9 respectively, of the cell 10. An anolyte which is generally stored in reservoir 11 is pumped via pump 12 through compartment 8 and loop 13, generally referred to as the anode loop. A catholyte which is generally stored in reservoir 14, is pumped via pump 15 through compartment 9 and loop 16, generally referred to as the cathode loop.

The zinc-bromine system is also a two phase system, in that the catholyte has bromine complexing agents and is comprised of a first aqueous phase and a second, non-aqueous, bromine-rich phase. The bromine-rich (complexed) phase tends to separate at the bromine active electrode 17 from the aqueous catholyte. This non-aqueous phase is stored in the reservoir 14, as illustrated schematically by shaded portion 14a.

A unitary separator-spacer unit, hereinafter termed "separator 18", delinates and defines the boundary between the anolyte and cathode compartments 8 and 9, respectively. The separator 18 is a membrane which prevents or hinders movement of anions such as the bromide and tribromide ions from cathode compartment 9 to the anode compartment 8. In a bipolar design, the zinc active electrode 19 end the bromine active electrode 17 are on opposite sides of the same electrode structure.

Further description of the zinc-bromine system can be obtained with reference to aforementioned U.S. Patent No. US-A-4,105,829; issued August 8, 1978.

The zinc-bromine system can be made more practicable by integrating and improving various components of Figure 1, as will be hereinafter explained with respect to the components shown in Figures 2 through 7. Where applicable within the description, like components may have similar numerical designations for the sake of brevity.

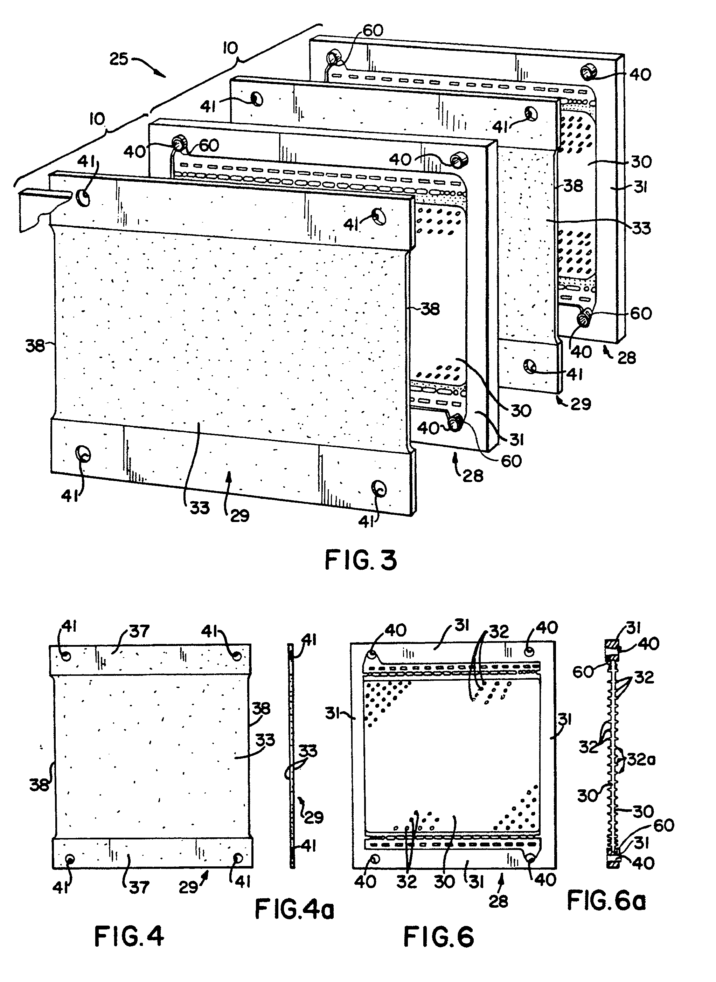

Now referring to Figure 2, an improved electrochemical system is shown in a schematic perspective view. The improved system utilizes a separator and electrode forming a portion of a stack of cells, as depicted in the exploded view of Figure 3.

The electrochemical system of Figure 2, comprises a battery stack 25 which in turn is comprised of a plurality of cells 10, each having two plates, as shown in Figure 3. One plate, according to the invention, is a separator 28 and the other plate is an electrode sheet 29. The separator has two functions combined in a single sheet. The first purpose is that of the separator 18 in Figure 1, i.e. to provide fluid communication between compartments as a membrane. A more detailed description of this function can be obtained from the above-mentioned U.S. Patent No. US-A-4,105,829; issued August 8, 1978; and also from U.S. Patent No. US-A-4,259,417; issued March 31, 1981 for an "Ionic Barrier", to inventors: R. J. Bellows and P. G. Grimes.

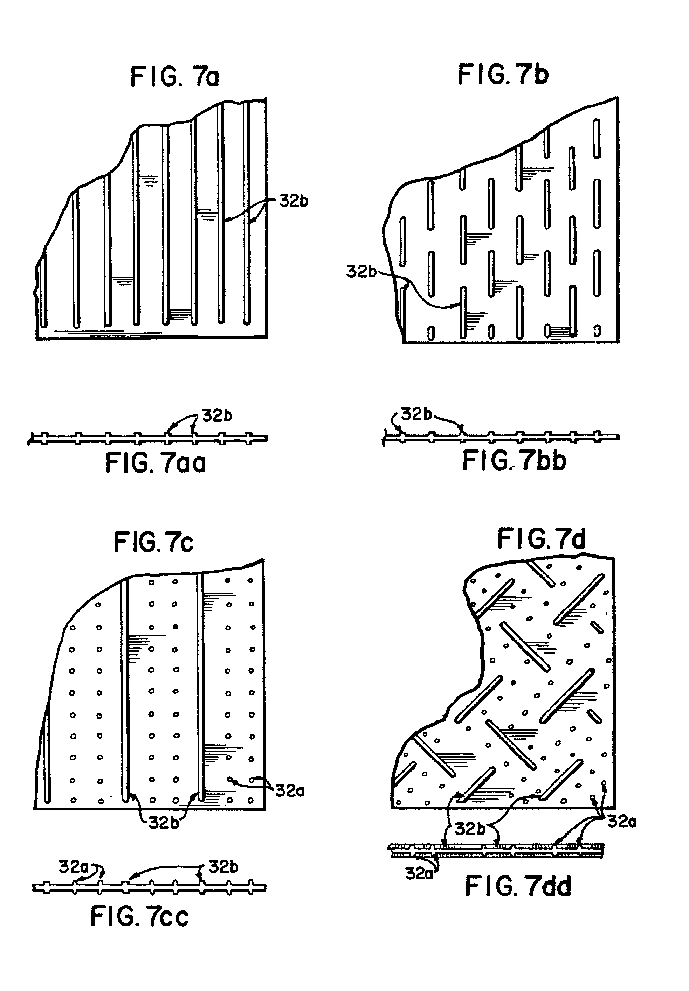

The second function of separator 28 is to space the separator 28 from the adjacent electrode sheets 29 so as to create respective anolyte and catholyte compartments 8 and 9 (Figure 1). The separator 28 has a microporous mid-portion surface 30 which is recessed from the non-porous surface 31 of the sides, as shown in more detail in Figures 6 and 6a. When the separators 28 are pressed between electrode sheets 29, the stack structure 25 is formed, as shown in Figure 2. The projections 32 on the microporous mid-portion surfaces are designed to maintain a spaced compartmental distance between the separator surface 30 and the flat conductive surfaces 33 of adjacent electrode sheet 29. The projections 32 provide structural means against collapse of surfaces 33 upon surfaces 30 and vice versa. The projections 32 on one side 30 of separator 28 are opposite corresponding projections 32 on the opposite side 30 of separator 28 as clearly illustrated in Figure 6a. This is done, to provide a greater strength against distortion of surfaces 33 upon surfaces 30. The projections 32 usually are designed as pebbles as depicted by arrows 32a in Figure 6a, and as also shown in Figures 7cc and 7dd, etc.

These projections 32 may also be designed with a rod-shape as depicted in Figures 7a, 7aa and 7b, 7bb; by arrows 32b. The projections 32 may also be a combination of pebble and rod-shaped protuberances as depicted in Figures 7c, 7cc and 7d, 7dd.

The design of these projections allows for an expeditious flow of electrolyte through the compartments 8 and 9, respectively. The flow of electrolyte is accomplished without entrapping gas bubbles about projections 32 within the compartmental cavities 8 and 9.

The mid-portion of the separator 28 can be comprised of a microporous membrane material known by the trade name Daramic[R], Series HW-0835, which is made by W. R. Grace Co., Polyfibron Division, Cambridge, Massachusetts. The raised side borders 31 of non-porous material may be any moldable plastics material. The plastics material of borders 31 is typically overmolded around the separator insert by injection molding, as can be seen from Figure 6a.

Separators 28 and sheets 29 are assembled by means of hollow male/female connectors 40 shown in detail in Figures 6 and 6a. When the components 28 and 29 are assembled in a stack 25, these hollow connectors 40 form electrolyte manifolds which supply compartments 8 and 9 with electrolyte via individual conduits or channels 60.

The male/female connectors 40 of separators 28 fit through the holes 41 (Figures 4 and 4a) in adjacent sheets 29, and snap into mating connectors 40 in subsequently adjacent separators 28.

The electrode sheet 29 of Figures 4 and 4a is comprised of a coextruded sheet of plastics material which has an electrically conductive mid-portion 33 and two side portions 37 of electrically non-conductive (insulating) plastics material. The top and bottom side portions 37 are co-extruded "side-by-side" along with the mid-portion 33 to form a one piece continuous electrode sheet, which continuous sheet is then cut to specific lengths to form a plurality of smaller sheets 29. The edges 38 of sheet 29 may be undercut to improve electrical isolation in stack 25.

This "side-by-side" profile co-extrusion of insulating and conductive plastics sheets 37 and 33, respectively, presents a new and an alternative fast method of production for all monopolar and bipolar electrodes including electrodes for zinc bromine batteries. Compared with compression molding, the co-extrusion method gives more uniformity in thickness, a stronger bonding between the insulating and conductive plastics, much desired flatness, and "electrode by meters" similar to lengths of textile fabric. The fabrication cost is much lower because the process is continuous.

A special formulation of carbon plastics is needed for mid-portion 33 of sheet 29 to provide good electrical conductivity, which still exhibit good extrudibility, good strength, and excellent anti-corrosive properties against bromine and zinc bromide in the electrolyte.

The preferred composition of the conductive carbon plastics is described in aforementioned U.S. Patent No. US-A-4,169,816; issued October 2, 1979, to H.C. Tsien. This formulation gives good conductivity (1 to 2 ohm-cm in resistivity), good flex strength, low permeability inertness to bromine, good extrudibility, better weldability and less mold shrinkage.

7

The conductive plastics is a mixture of 100 parts by weight of polyolefin copolymer, 25 parts by weight of special conductive carbon, 5 parts by weight each of carbon fiber and glass fiber, and 1 part by weight of fumed silica powder.

Some of the other advantages of coextruding the parts 33 and 37 are:

1. Good bonding between the insulating and conductive plastics.

2. Maintaining width, flatness and thickness dimensions with the tolerances specified.

3. Clear and sharp boundary lines between parts 33 and 37.

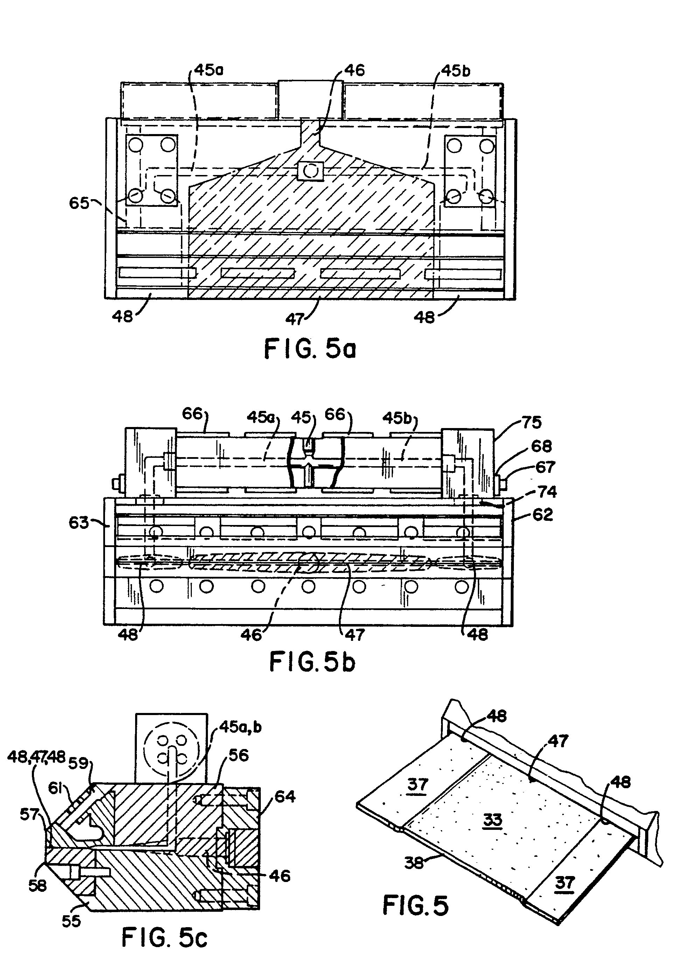

Figures 5a, 5b and 5c are respective top, front and side views of an extrusion die used to fabricate the electrode sheet. The center extrusion die 47 receives conductive plastics material from a horizontal extruder through conduit 46, while the side extrusion dies 48 each receive non-conducting plastics material from an overhead, vertical extruder via conduits 45a and 45b, respectively.

The horizontal extruder for the black conductive plastics material is a 2-1/2" (6.35cm) screw with L/D of 30:1, while the vertical extruder for the opaque insulating plastics material is a 1-1/2" (3.81cm) dia. screw with L/P of 24:1.

The melted insulating plastics material enters into the die at 90 degrees from the vertical stream 45, divides into two steams 45a and 45b and flows into one left end one right separate "coat hangers" alongside the main coat hanger 45. The die design is conventional, except that the side-by-side profile division is believed to be novel. The die is of split construction in order to facilitate any changes in the design and the ease of fabrication.

The main die assembly consists of a lower die body 55, upper die body 56, flexible upper lip 57 and fixed lower lip 58.

The die lip gap is ground to allow for the swell of plastics emerging out of the die. Lip gaps can be individually adjusted by screws 59 in conjunction with the nut bars 61. The two side plastics 62 and 63 close the two outsides of flow channels of the insulating plastics and give a box-like reinforcement.

Adapter 64 provides connection to the main extruder. There are (16) cartridge heaters 65 and (4) band heaters 66 for beating the two streams of plastics. Temperatures are controlled through thermocouples and individual zone temperature controllers.

The individual adjustment of the left and right streams 45a and 45b is made possible by ball headed adjusting screws 67 and locknut 68. Bushings 74 make good connection from valve blocks 75 to die block 56. All main parts of the die are made of A2 air hardening tool steel. The Bethelehem A2 air hardening steel has the following physical properties:

|  | **As-annealed** | **Heat Treated** |
|---|---|---|
| **Hardness (R/C)** | **15-20** | **56-58** |
| **Yield Strength**(psi)MPa | (55,000) 379.2 | (208,750) 1439.3 |
| **U.T.S.**(psi)MPa | (114,950) 792.6 | (255,250) 1759.9 |
| **Elongation %** | **18%** | **0.8%** |

With the head pressures from the extruders well over 1000 psi (6.895 MPa), the die cannot operate free from internal leakage between the insulating and conducting streams if the die is in the soft annealed condition. The hardened and reground die eliminates internal leakage. Four different types of insulating plastics were tried, they are:

| | **Melt Flow Index** |
|---|---|
| **Fiberfil J60/20E** | 230°C, 2160 gm load, 4.5 gm in 10 min. |
| **UGI LR711 HDPE** | 190°C, 2160 gm load, 10.5 gm in 10 min. |
| **Exxon P.P. 5052 P.P.** | 230°C, 2160 gm load, 0.9 to 1.5 gm in 10 min. |
| **Exxon P.P. 5011 P.P.** | 230°C, 2160 gm load, 0.45 to .85 gm in 10 min. |

Both Exxon homopolymer PP5011 and 5052 can match well with the conductive plastics. They came out of the die with no wrinkles, the sheets were flat and uniform.

Theoretically, aside from previous considerations, any polyethylene or polypropylene for side portions 37 can be a good match with the conductive plastics mid-portion 33, because the basic material used in the conductive plastics is the copolymer of the two. The melting points are in the range of 325 to 375°F (162.8 to 190.6°C). Therefore, approximately 400°F (204.4°C) is a proper temperature in range for the two streams to meet. Head pressures are 1500 to 1800 psi (10.34 to 12.41 MPa). These conditions made a good bond at the bonding line.

Close match of melt indices is necessary in order to eliminate scallops formed at the joint of the two edges. The viscosities and velocities of the streams from the two extruders has to be very closely equal. Pressures can be manipulated from two heads while varying the temperatures in various die zones to get the matching conditions. However, the differences between melt flow index of conductive and that of insulating plastics has to be minimized.

The extrusion speed can be around 20 ft./minute to 90 ft./minute (6.096 to 27.432 m/minute).

There are many downstream attachments that can be added so that the co-extruded sheet can be worked on while still hot and soft. Thus, the repeated heating and cooling cycles with the accompanied plastic degradations can be eliminated. Powder of activated carbon can be sprayed on one face of the carbon plastics as the sheet is emerging from the die and before the sheet is pinched by the cold nip rolls. The powder spray is limited in the conductive area.

Various types of surface finishes can be obtained by changing the nip rolls from polished chrome-plated surface to Teflon * coated and rubber rolls. It is also possible to replace nip rolls with dimpling rolls, so that cavities or special flow patterns can be formed on one or both faces of the co-extruded sheet. The hot forming rolls can make repeated patterns of design indentations in the electrode, if so desired.

The combination possibilities are only limited by imagination. For dimpling, the design is also repeated every revolution of the dimpling rolls. It is very much like printing repeated patterns on textile fabric. These downstream modifications such as catalyst spraying, dimpling, or hot forming can be added so that all operations can be done without significant added production cost.

Figure 5 is a schematic perspective view of the continuous electrode sheet emerging from the split die illustrated in Figures 5a, 5b and 5c.

Now referring to Figure 2, a further safety feature for the electrochemical system comprising the separator and spacer unit of the invention is illustrated. In order to prevent or reduce the risk of spilling corrosive bromine and bromine compounds in the event of casing or compartmental rupture, the various compartments can be nested, with the bromine-containing compartment 50 being the most internal compartment. The bromine compartment 50 is surrounded by the catholyte-containing compartment 51, which in turn is surrounded by the anolyte-containing compartment 52. Compartments 50, 51, and 52 are all enclosed by outer casing 53.

Shunt currents can be eliminated along formed manifolds (connectors 40) by applying a protective current along these electrolyte-carrying conduits, in accordance with the teachings expressed in aforementioned U.S. Patent No. US-A-4,197,169 issued April 8, 1980 to M. Zahn, P. G. Grimes and R. J. Bellows.

The two-leaved electrochemical cell construction employing the separator-spacer unit of this invention

*"Teflon" is a trade mark has fever parts and is easier to fabricate and assemble than prior systems of this kind. Further modifications to the invention may occur to those skilled practitioners of this art. Such modifications have not been described for the sake of brevity.

Other preferred features of the invention, which features may be taken individually or in combination, are:-

(a) At least some of the said projections have non-ionically conductive caps thereon or thereto.

(b) The projections are diamond shaped.

(c) The projections are of a different material from that of the web.

(d) The projections are substantially non-porous.

(e) The leak and impact resistant construction contains a bromine-rich phase comprising at least one bromine complexing agent.

(f) Each compartment of said construction comprises a chemically inert plastic frame.

(g) The catholyte employable comprises a bromine complexing agent.

(h) The leak and impact resistant construction for an electrochemical system has a second phase comprising at least one organic solvent.

(i) Each compartment thereof comprises a chemically inert metallic frame.

(j) The catholyte employable partially comprises a product-extraction complexing agent, or comprises a substantially non-aqueous phase for carrying reactants.

(k) The anolyte employable comprises substantially organic extractant for products, or comprises a substantially non-aqueous phase for carrying reactants.

(l) The extruded sheet electrode is a monopolar or bipolar electrode.

(m) Said sheet electrode has said non-conductive material as one or more olefin homo- and/or copolymers, such as PE, PP, or EP copolymer.

(n) The conductive material is preferably a synthetic plastics material and, suitably, is inert to bromine and compounds thereof.

(o) The sheet electrode is hot-formed and, desirably, dimpled.

(p) In the stack arrangement the said projections on one side of the separator-spacer unit are disposed opposite corresponding projections on the other side of the separator-spacer unit.

(q) There is more than one stack of cells in the electrochemical construction.

(r) The stack(s) comprise a zinc-bromine system.

(s) The electrochemical construction further has means for supplying a protective current to the cell(s).

(t) The construction forms part of a battery or electrolyser or fuel cell.

## Claims

1. A unitary separator and spacer unit (28) for use in an electrochemical cell having electrodes (29) and through which cell, during operation, a circulating electrolyte flows in contact with the electrodes, adjacent pairs of electrodes (29) being separated and spaced apart by a respective unit (28), the said unit comprising a single non-porous frame or border (31) surrounding and defining the edges or borders of the faces of a non-perforated microporous web (30) which is thinner than the frame or border (31) in order to define or form either internal compartments or recesses forming at least part of such internal compartments between the unit and the adjacent electrodes when assembled with the latter so that circulating electrolyte can flow about said electrodes, said web being capable of providing ionic communication between adjacent compartments of the cell, a plurality of discrete pebble-shaped and/or rod-shaped projections (32, 32a, 32b) extending from each face of the web and which projections are ionically either less conductive or substantially non- conductive for maintaining a spaced compartmental distance between said unit (28) and adjacent electrodes (29), substantially all of said projections extending from one face of the web being directly opposite corresponding projections extending from the other face thereof, the web being preferably ion-selective.

2. A unit as in claim 1 in which the frame (31) has a connector (40) which is cooperable with a connector (40) of an adjacent frame (31), when the electrochemical cell is assembled, for the passage of electrolyte through the assembled electrochemical cell, and a channel (60) in the wall of each connector for the passage of electrolyte from one connector into a compartment and via the channel (60) into another connector (40).

3. A unit as in claim 2 in which each connector (40) is of the male-female type, the male part being adapted to be received in the female part of a connector of another unit on one side and the female part being adapted to receive the male part of a connector of a further unit on the opposite side.

4. A unit as in any one of claims 1 to 3 in which the frame (31) is overmolded around the edges of the web (30).

5. A unit as in any one of claims 1 to 4 in which at least some of the projections (32) have non-ionically conductive caps thereon or thereto.

6. A unit as in any one of claims 1 to 5 in which the projections (32) are diamond or rhombus shaped.

7. A unit as in any one of claims 1 to 6 in which the projections (32) are of a different material from the material of the web.

8. A unit as in any one of claims 1 to 7 in which the projections (32) are substantially non-porous.

9. An electrochemical battery comprising at least one stack of cells (10) each comprised of a unitary separator and spacer unit (28) as claimed in any one of claims 1 to 8 disposed between a pair of electrodes (29).

10. A battery as in claim 9 in which each electrode (29) is comprised of a plastics sheet having a coextruded electrically-conductive mid-portion (33) and electrically non-conductive relatively narrow side-portions (37) on no more than two opposite sides of the mid-portion.

11. A battery as in claim 10 or claim 11 in which the spacer units (28) and the electrodes (29) are assembled into a stack of alternate spacer units and electrodes by hollow connectors (40) associated with the spacer units, each connector (40) of one unit (28) having a male portion which is received in a female portion of the connector (40) of an adjacent spacer unit (28) to form fluid conduits for said cells.

12. A battery as in claim 11 in which adjacent spacer units (28) and electrodes (29) define compartments or spaces in which electrolyte can be received and/or can flow, and in which each hollow connector (40) has a channel or orifice (60) in the wall thereof providing communication with a respective compartment or space for the passage of electrolyte through the compartment or space to and/or from the interior of the hollow connectors (40).

**Revendications**

1. Unité monobloc à séparateur et entretoise (28) destinée à être utilisée dans une cellule électrochimique possédant des électrodes (29) et à travers laquelle, pendant le fonctionnement, un électrolyte en circulation s'écoule en contact avec les électrodes, des couples adjacents d'électrodes (29) étant distants et séparés par une unité respective (28), ladite unité comprenant un cadre ou bord unique non poreux (31) entourant et définissant les bords ou limites des faces d'une âme microporeuse non perforée (30), qui est plus mince que le cadre ou le bord (31) de manière à définir ou former soit des compartiments internes, soit des renfoncements faisant au moins partie de tels compartiments internes entre l'unité et les électrodes adjacentes lorsqu'ils sont assemblés avec ces électrodes de sorte que l'électrolyte en circulation peut s'écouler autour desdites électrodes, ladite âme pouvant établir une communication ionique entre des compartiments adjacents de la cellule, une pluralité de parties saillantes discrètes (32, 32a, 32b) en forme de caillou et/ou de tiges, qui s'étendent à partir de chaque face de l'âme et sont soit moins conductrices, soit sensiblement non conductrices du point de vue ionique de manière à maintenir une distance de séparation délimitant un compartiment entre ladite unité (28) et les électrodes adjacentes (29), sensiblement la totalité desdites projections s'étendant à partir d'une face de l'âme en étant situées directement à l'opposé de parties saillantes correspondantes qui s'étendent à partir de l'autre face de l'âme, cette dernière étant de préférence sélective du point de vue des ions.

2. Unité selon la revendication 1, dans laquelle le cadre (31) possède un connecteur (40) apte à coopérer avec un connecteur (40) d'un cadre adjacent (31), lorsque la cellule électrochimique est assemblée, pour le passage de l'électrolyte à travers la cellule électrochimique assemblée, et un canal (60) situé dans la paroi de chaque connecteur de manière à permettre le passage de l'électrolyte depuis un

## EP 0 203 656 B1

connecteur dans un compartiment et, par l'intermédiaire du canal (60), dans un autre connecteur (40).

3. Unité selon la revendication 2, dans laquelle chaque connecteur (40) est du type mâle-femelle, la partie mâle étant adaptée pour être reçue dans la partie femelle d'un connecteur d'une autre unité, sur un côté, et la partie femelle étant adaptée pour recevoir la partie mâle d'un connecteur d'une autre unité, sur le côté opposé.

4. Unité selon l'une quelconque des revendications 1 à 3, dans laquelle le cadre (31) est moulé pardessus et autour des bords de l'âme (30).

5. Unité selon l'une quelconque des revendications 1 à 4, dans laquelle des capuchons non conducteurs du point de vue icnique sont placés sur ou fixés à au moins certaines des parties saillantes (32).

6. Unité selon l'une quelconque des revendications 1 à 5, dans laquelle les parties saillantes (32) possèdent une forme rhombique ou la forme d'un diamant.

7. Unité selon l'une quelconque des revendications 1 à 6, dans laquelle les parties saillantes (32) sont réalisées en un matériau différent de celui de l'âme.

8. Unité selon l'une quelconque des revendications 1 à 7, dans laquelle les parties saillantes (32) sont sensiblement non poreuses.

9. Batterie électrochimique comprenant au moins une pile de cellules (10) constituées chacune par une unité monobloc à séparateur et entretoise (28) telle que revendiquée dans l'une quelconque des revendications 1 à 8 et disposée entre un couple d'électrodes (29).

10. Batterie selon la revendication 9, dans laquelle chaque électrode (29) est constituée par une feuille de matière plastique comportant une partie médiane coextrudée électriquement conductrice (33) et des parties latérales relativement étroites non conductrices du point de vue électrique (37), sur pas plus de deux côtés opposés par de la partie médiane.

11. Batterie selon la revendication 10 ou 11, dans laquelle les unités à entretoise (28) et les électrodes (29) sont assemblées sous la forme d'une pile d'unités à entretoise et d'électrodes, alternées, au moyen de connecteurs creux (40) associés aux unités à entretoise, chaque connecteur (40) d'une unité (28) possédant une partie mâle qui est logée dans une partie femelle du connecteur (40) d'une unité à entretoise adjacente (28) pour former des conduits fluidiques pour lesdites cellules.

12. Batterie selon la revendication 11, dans laquelle des unités à entretoise (28) et des électrodes (29), adjacentes, définissent des compartiments ou des espaces, dans lesquels un électrolyte peut être logé et/ou peut s'écouler, et dans lesquels chaque connecteur creux (40) possède un canal ou un orifice (60) ménagé dans sa paroi et établissant une communication avec un compartiment ou un espace respectif pour le passage de l'électrolyte à travers le compartiment ou l'espace en direction et/ou en provenance de l'intérieur des connecteurs creux (40).

## Patentansprüche

1. Integrale Separator- und Abstandshaltereinheit (28) zur Verwendung in einer elektrochemischen Zelle mit Elektroden (29), durch welche Zelle bei Betrieb ein zirkulierender Elektrolyt unter Berührung der Elektroden fließt, wobei nebeneinanderliegende Elektrodenpaare (29) durch jeweils eine Einheit (28) getrennt und beabstandet sind, die Einheit (28) einen nicht porösen Einzelrahmen oder Rand (31) umfaßt, der die Ränder oder Grenzen der Flächen einer nicht perforierten mikroporösen Bahn (30) umgibt und umschreibt, welche Bahn dünner ist als der Rahmen oder die Umrandung (31), um entweder Innenkammern zu definieren oder zu bilden oder Aussparungen, welche wenigstens einen Teil solcher Innenkammern zwischen der Einheit und den benachbarten Elektroden bilden, wenn mit letzteren zusammengebaut, sodaß zirkulierender Elektrolyt die Elektroden umspülen kann, wobei die Bahn in der Lage ist, für Ionentransport zwischen nebeneinanderliegenden Kammern der Zelle zu sorgen, eine Vielzahl diskreter kieselförmiger und/oder stabförmiger Vorsprünge (32,32a,32b) sich von jeder Fläche der Bahn erstrecken, welche Vorsprünge entweder ionisch weniger leitfähig oder im

12

EP 0 203 656 B1

wesentlichen nichtleitend sind, um einen beabstandeten kammerartigen Zwischenraum zwischen der Einheit (28) und benachbarten Elektroden (29) aufrechtzuerhalten, wobei im wesentlichen alle dieser sich von einer Fläche der Bahn erstreckenden Vorsprünge den entsprechenden von der anderen Seite der Bahn ausgehenden Vorsprüngen genau entgegengesetzt sind, wobei die Bahn vorzugsweise ionenselektiv ist.

2. Einheit nach Anspruch 1, bei welcher der Rahmen (31) ein Verbindungsstück (40) hat, das nach Zusammenbau der elektrochemischen Zelle mit dem Verbindungsstück (40) eines benachbarten Rahmens (31) in zusammenwirkender Verbindung für den Elektrolytdurchgang durch die zusammengebaute elektrochemische Zelle steht, und einen Kanal (60) in der Wand jedes Verbindungsstückes für den Elektrolytdurchgang von einem Verbindungsstück in eine Kammer und via Kanal (60) in ein anderes Verbindungsstück (40).

3. Einheit nach Anspruch 2, bei welcher jedes Verbindungsstück (40) jeweils einen männlichen und weiblichen Teil hat, wobei der männliche Teil so konzipiert ist, daß er im aufnehmenden Teil eines Verbindungsstückes einer anderen Einheit an einer Seite Aufnahme findet und der aufnehmende Teil so konzipiert ist, daß er den männlichen Teil eines Verbindungsstückes einer weiteren Einheit auf der anderen Seite aufnehmen kann.

4. Einheit nach einem der Ansprüche 1 bis 3, bei welcher der Rahmen (31) entlang der Ränder der Bahn (30) aufgeformt ist.

5. Einheit nach einem der Ansprüche 1 bis 4, bei welcher wenigstens einige der Vorsprünge (32) ionisch nicht leitende Kappen aufweisen.

6. Einheit nach einem der Ansprüche 1 bis 5, bei welcher die Vorsprünge (32) rauten- oder rhombenförmig sind.

7. Einheit nach einem der Ansprüche 1 bis 6, bei welcher die Vorsprünge (32) aus einem anderen Material als die Bahn sind.

8. Einheit nach einem der Ansprüche 1 bis 7, bei welcher die Vorsprünge (32) im wesentlichen nicht porös sind.

9. Elektrochemische Batterie, welche wenigstens einen Stapel Zellen (10) umfaßt, jeweils bestehend aus einer integralen Separator- und Abstandshaltereinheit (28), wie in einem der Ansprüche 1 bis 8 beansprucht, welche zwischen einem Elektrodenpaar (29) angeordnet ist.

10. Batterie wie in Anspruch 9, bei welcher jede Elektrode (29) aus einer Kunststoffolie mit einem koextrudierten elektrisch leitenden Mittelabschnitt (33) und elektrisch nicht leitenden, verhältnismäßig schmalen Seitenabschnitten (37) auf nicht mehr als zwei gegenüberliegenden Seiten des Mittelabschnittes besteht.

11. Batterie nach Anspruch 10 oder 11, bei welcher die Abstandshaltereinheiten (28) und die Elektroden (29) mittels den Abstandshaltereinheiten zugeordneten hohlen Verbindungsstücken (40) zu einem Stapel von abwechselnd Abstandshaltereinheiten und Elektroden zusammengebaut sind, wobei jedes Verbindungsstück (40) einer Einheit (28) einen männlichen Teil hat, der im aufnehmenden Teil des Verbindungsstückes (40) einer benachbarten Abstandshaltereinheit (28) Aufnahme findet, um Flüssigkeitsleitungen für diese Zellen zu bilden.

12. Batterie nach Anspruch 11, bei welcher benachbarte Abstandshaltereinheiten (28) und Elektroden (29) Kammern oder Räume umschreiben, in denen Elektrolyt aufgenommen und/oder fließen kann, und bei welcher jedes hohle Verbindungsstück (40) einen Kanal oder Durchgang (60) in seiner Wand aufweist, welcher eine Verbindung mit einer entsprechenden Kammer oder Raum für den Elektrolytdurchgang durch die Kammer oder den Raum in Richtung zu und/oder aus dem Inneren des hohlen Verbindungsstückes (40) herstellt.

13

ZINC- BROMINE
CIRCULATING BATTERY

ANODE LOOP    CATHODE LOOP    16

13    ⊖    ⊕    10

SEPARATOR    Br$_2$ ACTIVE
ELECTRODE 17

Zn ACTIVE
ELECTRODE 19    9

8    18

11    14    14a

Br$_2$ COMPLEX
STORAGE

PUMP 12    13

Zn DEPOSIT    PUMP 15

16

Electrochemical $Zn^\circ \rightleftharpoons Zn^{++} + 2e^-$
Reactions: $Br_2 + 2e^- \rightleftharpoons 2Br^-$
Self discharge: $Zn^\circ + Br_2 \longrightarrow ZnBr_2$

# FIG. I

**FIG. 2**

FIG. 3

FIG.4    FIG.4a    FIG.6    FIG.6a

FIG. 5a

FIG. 5b

FIG. 5c

FIG. 5

FIG. 7a

32b

FIG. 7b

32b

32b

FIG. 7aa

32b

FIG. 7bb

FIG. 7c

32a

32b

FIG. 7d

32b

32a

32a

32a

32b

FIG. 7cc

FIG. 7dd